# EUROPEAN PATENT APPLICATION

(11) **EP 4 837 424 A1**
(43) Date of publication of application: **11.11.2026**
(21) Application number: 25174546.9
(22) Date of filing: 06.05.2025
(51) Int. Cl.: A23B 2/80, A23B 2/82, A23B 4/06, A23B 4/07, B65G 33/26, B65G 65/46

(54) **AN APPARATUS AND A METHOD FOR THAWING FROZEN FOOD PRODUCTS**

(71) Applicant: Istaekni ehf., 400 Isafirdi (IS)
(72) Inventor: KRISTJANSSON, Ragnar Ingi, 400 Ísafirdi (IS)
(74) Representative: HKW Intellectual Property PartG mbB

(57) **Abstract**

The present relates to apparatus and a method for thawing frozen food products, comprising:
• an elongated tank configured to carry a heating liquid for thawing the frozen food product, where the tank has an infeed section where the frozen food products are fed into the tank and an outfeed section where the thawed food products are removed from the tank,
• a spiral auger extending between the infeed section and the outfeed section, where the spiral auger comprises cylindrical helical flights configured to advance the food products from the infeed section towards the outfeed section through rotational movement of the spiral auger,
wherein the axial pitch between adjacent helical flights at the infeed end is greater at the infeed section than the axial pitch between adjacent helical flights at the outfeed section of the auger.

## Description

### FIELD OF THE INVENTION

The present invention relates to an apparatus and a method for thawing frozen food products in a tank using an auger.

### BACKGROUND OF THE INVENTION

Thawing apparatuses are widely used in the food processing industry to defrost frozen food products such as fish prior to downstream processing or packaging. A common design includes a thawing tank equipped with a spiral auger comprising rotating cylindrical helical flights. These helical flights are configured to advance the frozen food products from an infeed section toward an outfeed section by means of the auger's rotational movement. This design facilitates a continuous, first-in-first-out (FIFO) product flow, which is essential for maintaining process consistency and traceability. During operation, warm water is continuously injected into the tank to maintain an optimal thawing temperature and ensure efficient thermal exchange between the water and the frozen products.

While such systems provide reliable thawing performance, several challenges persist. One primary concern is maintaining a balance between high throughput and effective control over the freshness and quality of the thawed food products. As throughput increases, there is a risk of inadequate thawing or thermal gradients developing within the product mass, which may lead to partial thawing, surface overexposure, or inconsistent product temperature profiles. These issues can negatively impact the sensory qualities, microbial stability, and overall freshness of the thawed products, particularly when dealing with sensitive commodities such as fish intended for fresh sale.

Additionally, maintaining precise control over water temperature and flow dynamics throughout the thawing process is critical, yet difficult, especially under variable loading conditions or fluctuating product input temperatures. Insufficient control can result in either incomplete thawing or over-thawing, both of which diminish product quality and commercial value.

### SUMMARY OF THE INVENTION

It is an object of the invention to provide an improved thawing apparatus and a method that address these challenges by enhancing throughput capacity while ensuring consistent and controlled thawing to preserve the freshness and integrity of the food products.

In a first aspect of the invention, an apparatus is provided for thawing frozen food products, comprising:
- an elongated tank configured to carry a heating liquid for thawing the frozen food product, where the tank has an infeed section where the frozen food products are fed into the tank and an outfeed section where the thawed food products are removed from the tank,
- a spiral auger extending between the infeed section and the outfeed section, where the spiral auger comprises cylindrical helical flights configured to advance the food products from the infeed section towards the outfeed section through rotational movement of the spiral auger,
wherein the axial pitch between adjacent helical flights is greater at the infeed section than the axial pitch between adjacent helical flights at the outfeed section of the auger.

In one embodiment, the axial pitch between adjacent helical flights remains constant over a defined length of the auger spanning at least three pitches. By way of example, the auger may be divided into multiple axial sections along the length of the thawing tank, each having a different, but fixed, helical pitch. As an example, a first upstream section of the auger may comprise a constant pitch of approximately 1.5 meters, a second, intermediate section may comprise a reduced constant pitch of approximately 1.2 meters, and a third, downstream section adjacent the outfeed may have an even smaller constant pitch, for example approximately 1.0 meter. These pitch values are provided solely for illustrative purposes and should not be construed as limiting, as other configurations and pitch gradients may be employed depending on the specific application requirements.

In another alternative embodiment, the axial pitch between successive helical flights progressively decreases toward the outfeed end of the auger. Referring to the previous example, this might include where the axial pitch decreased between successive helical flights from 1.5m to 1m.

In an embodiment, the apparatus further comprises a temperature controlling system for controlling the temperature of the heating liquid, preferably a water, during the thawing of the frozen food products. This ensures that the thawing conditions remain within a defined thermal range, thereby promoting uniform heat transfer and minimizing the risk of partial or uneven thawing.

In an alternative embodiment, the temperature controlling system comprises a plurality of nozzles positioned along the elongated tank, extending from a heat source and upwards and into the heating liquid. These nozzles are fluidly connected to a heat source and oriented to deliver heated liquid upward into the tank. This arrangement enables localized temperature adjustment along different sections of the tank, improving thermal uniformity, enhancing energy efficiency, and enabling more precise control over the thawing profile as the products advance along the spiral auger path.

In one embodiment, the temperature control system is configured to establish and maintain a controlled thermal gradient along the axial length of the thawing tank. Specifically, the heating liquid is regulated such that its temperature is higher at the infeed section where the food products enter in a fully frozen state and progressively decreases toward the outfeed section. This thermal gradient promotes efficient initial heat transfer to rapidly initiate thawing, while progressively lower temperatures downstream prevent overheating of the product as it approaches its fully thawed state.

Preferably, the temperature control system is further configured to dynamically regulate the heating liquid such that the food products exiting the outfeed section reach a predefined target temperature, for example around 0 °C. This ensures that the products are thawed uniformly to a physiologically optimal temperature, minimizing thermal stress and preserving texture, moisture content, and microbiological integrity.

In an alternative embodiment, this may be achieved by providing the temperature control system with a recirculating system configured to collect the heating liquid after the thawing process and reuse it in a subsequent thawing cycle, and wherein generating the temperature gradient comprises passing the heating liquid through a sequential heat exchanger prior to recirculation, thereby establishing the temperature gradient before introducing the liquid into the tank.

This configuration offers several technical advantages, such as high throughput, thawing with consistent product quality while at the same time reducing the risk of over-thawing or temperature overshoot. Furthermore, by tailoring the thermal profile to the product flow, energy efficiency is improved, and operational control is enhanced.

The elongated tank preferably has a cross-sectional shape essentially following the outer cylindrical shape of the helical flights. This conformal design minimizes radial clearance between the flight edges and the inner surface of the tank, thereby mitigating the risk of mechanical entrapment or wedging of food products between the helical structure and the tank wall. Moreover, by maintaining a consistent clearance profile along the axial length of the tank, the likelihood of product stagnation, recirculation, or localized accumulation is significantly reduced. This not only promotes uniform residence time and controlled thermal exposure but also contributes to improved flow dynamics, enhanced hygienic conditions, and reduced cleaning and maintenance requirements. Also, it is prevents food products from being clamped between the helical flights and the tank, or that food products become accumulated at the tank.

In a second aspect of the invention, a method is provided for operating an apparatus for thawing frozen food products, comprising:
- providing an elongated tank configured to carry a heating liquid for thawing the frozen food product, where the tank has an infeed section where the frozen food products are fed into the tank and an outfeed section where the thawed food products are removed from the tank,
- providing a spiral auger extending between the infeed section and the outfeed section, where the spiral auger comprises cylindrical helical flights configured to advance the food products from the infeed section towards the outfeed section through rotational movement of the spiral auger,
- feeding the frozen food products as a frozen food blocks at the infeed end, and
- designing the spiral auger such that the axial pitch between adjacent helical flights is greater at the infeed section than the axial pitch between adjacent helical flights at the outfeed section of the auger, and such that the axial pitch between adjacent helical flights at the infeed end accommodates the dimensions of the frozen food blocks.

In an alternative embodiment, the method further comprises actively regulating the temperature of the heating liquid during the thawing process of the frozen food products. This may be achieved, for example, by establishing a controlled temperature gradient along the axial length of the thawing tank, wherein the temperature of the heating liquid is maintained at a higher level near the infeed section-where the frozen products enter-and gradually decreases toward the outfeed section. This axial temperature profiling facilitates an efficient and progressive thawing process that aligns with the thermal requirements of the product as it advances through the tank.

To optimize product quality, the temperature control system is in an embodiment configured to ensure that the food products reach a predefined target core temperature upon exiting the outfeed section of the tank. In a preferred implementation, this target temperature lies within the range of approximately - 2 °C to +2 °C, and more preferably around 0 °C. Maintaining this temperature range at the discharge point ensures that the products are fully thawed without being overheated, allowing them to be discharged in a discrete and non-adherent state.

This controlled thermal profiling provides several technical advantages: it prevents localized overheating and partial cooking, preserves the structural and sensory qualities of the food products, and ensures uniform thawing across the product batch. Furthermore, by achieving a consistent discharge temperature, the system facilitates downstream handling, such as sorting, packaging, or quality inspection, and reduces the risk of microbial proliferation often associated with excessive thermal exposure.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figures 1 to 3 illustrate various views of an exemplary embodiment of an apparatus in accordance with the present invention for the thawing of frozen food products,
Figure 4 depicts graphically a heat temperature controlling system for controlling the temperature of the heating liquid during the thawing of the frozen food products, and
Figure 5 shows a flowchart of a method according to the present invention for thawing frozen food products.

### DESCRIPTION OF EMBODIMENTS

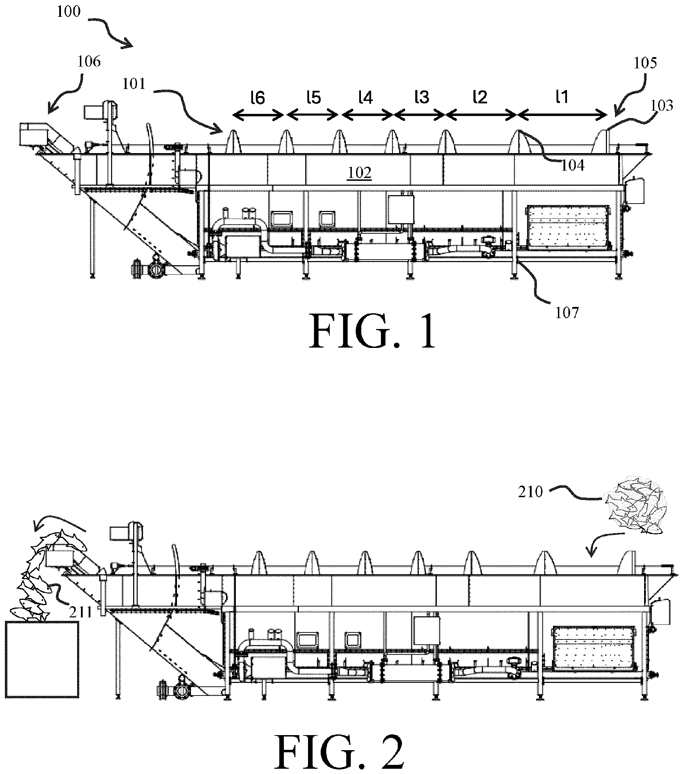

Figures 1 to 3 illustrate an exemplary embodiment of an apparatus 100 in accordance with the present invention for thawing of frozen food products 210 such as a frozen fish.

The apparatus comprises a spiral auger 101, an elongated tank 102, and a supporting frame structure 107 configured to structurally support and maintain the alignment of both the spiral auger and the tank during operation.

The tank 102 is dimensioned and configured to contain a heating medium, preferably water or an aqueous solution, maintained at a temperature suitable for thawing frozen food products in a hygienic and energy-efficient manner. The tank includes an infeed section 105, where frozen food products are introduced into the tank as illustrated in figure 2, and an outfeed section 106, from which thawed food products are discharged 211. These sections are typically located at opposite longitudinal ends of the tank to facilitate continuous-flow processing.

The spiral auger 101 is arranged to extend axially within the interior of the tank 102, spanning from the infeed section 105 to the outfeed section 106. The auger comprises a central shaft 310 around which a plurality of helical flights 103, 104 are circumferentially and axially spaced to form a continuous screw conveyor. The helical flights are generally cylindrical geometry and are configured to mechanically engage and transport the frozen food products 210 along the longitudinal axis of the tank. The axial transport is facilitated by rotational motion of the auger, which is driven by a motorized drive unit (not shown), thereby inducing translational movement of the food products through the heated liquid medium contained within the tank. This movement enables uniform and progressive thawing of the products as they traverse the system.

In the illustrated embodiment, the axial pitch 11 between adjacent helical flights 103, 104 in the vicinity of the infeed section 105 is greater than the axial pitch 16 at the outfeed section. This increased spacing is specifically designed to accommodate the relatively large dimensions of the incoming frozen food blocks 210, as depicted in figure 2, thereby facilitating initial capture and immersion in the heating medium. The larger pitch also reduces mechanical resistance during loading and improves fluid circulation around the food product during the early stages of thawing.

In one exemplary embodiment, the axial pitch between successive helical flights remains constant over a predefined length of the auger. For instance, as shown in Figure 1, the flights may exhibit a uniform pitch such that l1=l2 across a series of at least three consecutive pitches, where l3=l4=l5=l6. This uniform section allows for controlled residence time and stable axial advancement within a central zone of the tank.

Alternatively, in another embodiment (not depicted), the axial pitch between successive flights may be designed to decrease progressively along the auger's length toward the outfeed section 106. This gradual reduction in pitch results in increased product compression and compaction, improving heat transfer efficiency and assisting in the removal of residual frozen cores prior to discharge. The variation in pitch may be linear or nonlinear depending on processing requirements.

Such pitch modulation along the auger provides a mechanism for controlling product dwell time, velocity, and thawing uniformity across different segments of the tank, enabling optimized performance tailored to the specific thermal and physical characteristics of the food products being processed.

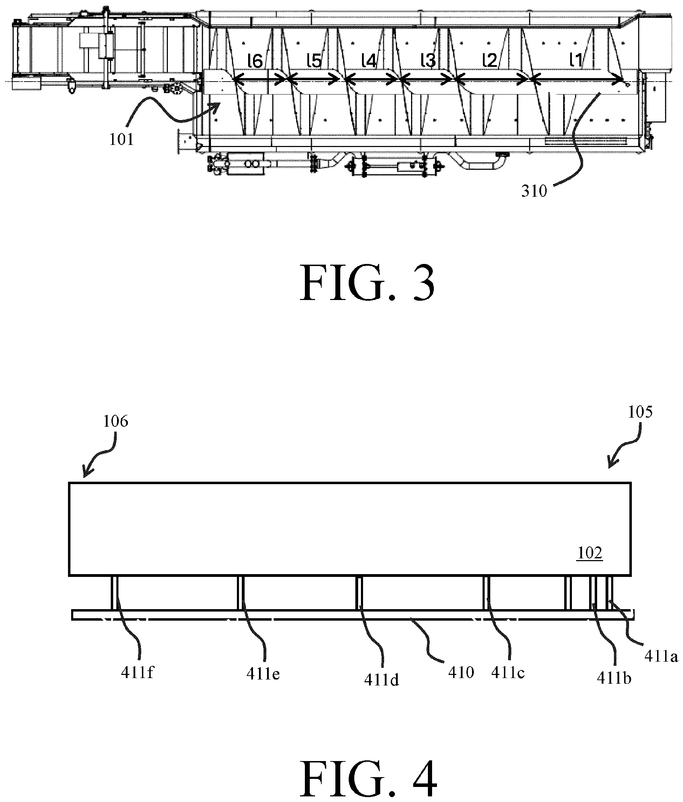

The apparatus 100 may in an alternative embodiment, as depicted in figure 4, further comprise a temperature controlling system for controlling the temperature of the heating liquid during the thawing of the frozen food products, comprising a plurality of nozzles 411a-411f positioned along the elongated tank extending from a common heat source 410 and upwards and into the heating liquid.

The temperature control system may be configured to establish and maintain a controlled thermal gradient along the longitudinal axis of the tank 102. Specifically, the system regulates the temperature of the heating liquid such that a higher temperature is maintained in the region proximate to the infeed section 105, e.g. via more heating nozzles as shown, where greater thermal input is required to initiate and sustain the thawing of fully frozen food products, while a comparatively lower temperature is maintained near the outfeed section 106. This temperature differential enables optimized energy utilization and minimizes the risk of overheating or partial cooking of the food products as they transition through the thawing process.

Additionally, the temperature control system may be further configured to dynamically adjust the heating liquid temperature profile based on real-time process parameters to ensure that the food products achieve a predefined target temperature upon reaching the outfeed section 106. This ensures that the thawed products are discharged from the tank at a temperature suitable for subsequent handling, processing, or packaging, while maintaining food safety and quality standards.

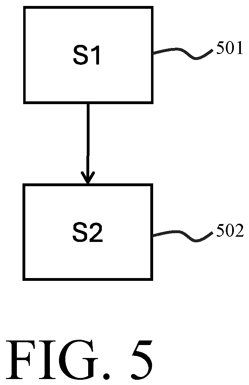

Figure 5 illustrates a flowchart of a method according to the present invention for thawing frozen food products, such as fish or other food items, using an elongated thawing tank as described in relation to Figures 1 through 4. The tank is configured to contain a heating liquid and is equipped with a spiral auger comprising cylindrical helical flights designed to convey the frozen products from an infeed section to an outfeed section by means of rotational movement.

In Step S1 (501), frozen food products introduced in the form of solid frozen blocks are fed into the infeed section of the tank. The spiral auger is designed with a variable axial pitch such that the spacing between adjacent helical flights at the infeed section is greater than the corresponding spacing at the outfeed section. This larger initial pitch is dimensioned to accommodate the size and geometry of the frozen food blocks, facilitating effective engagement, immersion, and initial thawing.

In Step S2 (502), the temperature of the heating liquid is actively regulated during the thawing process. A controlled temperature gradient is established along the longitudinal axis of the tank, whereby a higher temperature is maintained at the infeed section to initiate thawing and a lower temperature is maintained at the outfeed section to prevent overheating or partial cooking of the thawed product. The temperature control system is configured to ensure that the food products attain a predefined target core temperature upon reaching the outfeed section-typically within the range of -2°C to +2°C, and ideally around 0°C. Achieving this target temperature facilitates the clean, individual, and separate discharge of thawed food products from the tank, ensuring hygienic handling and compatibility with downstream processing operations.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. An apparatus for thawing frozen food products, comprising:
• an elongated tank configured to carry a heating liquid for thawing the frozen food product, where the tank has an infeed section where the frozen food products are fed into the tank and an outfeed section where the thawed food products are removed from the tank,
• a spiral auger extending between the infeed section and the outfeed section, where the spiral auger comprises cylindrical helical flights configured to advance the food products from the infeed section towards the outfeed section through rotational movement of the spiral auger,
wherein the axial pitch between adjacent helical flights is greater at the infeed section than the axial pitch between adjacent helical flights at the outfeed section of the auger.

2. The apparatus according to claim 1, wherein the axial pitch between adjacent helical flights remains constant over a defined length of the auger spanning at least three pitches.

3. The apparatus according to claim 1, wherein the axial pitch between successive helical flights progressively decreases toward the outfeed end of the auger.

4. The apparatus according to any of the preceding claims, further comprising a temperature controlling system for controlling the temperature of the heating liquid during the thawing of the frozen food products.

5. The apparatus according to claim 4, wherein the temperature controlling system comprises plurality of nozzles positioned along the elongated tank, extending from a heat source and upwards and into the heating liquid.

6. The apparatus according to claim 4 or 5, wherein the temperature control system is configured to regulate the heating liquid such that a temperature gradient is established along the tank, with a higher liquid temperature at the infeed section and a lower temperature at the outfeed section.

7. The apparatus according to claim 6, wherein the temperature control system includes a recirculating system configured to collect the heating liquid after the thawing process and reuse it in a subsequent thawing cycle, and wherein generating the temperature gradient comprises passing the heating liquid through a sequential heat exchanger prior to recirculation, thereby establishing the temperature gradient before introducing the liquid into the tank.

8. The apparatus according to claim 6, wherein the temperature controlling system is configured to adjust the temperature of the heating liquid such that the thawed food products have a predefined target temperature at the outfeed end when removed from the tank.

9. The apparatus according to any of the preceding claims, wherein the elongated tank has a cross-sectional shape essentially following the outer cylindrical shape of the helical flights.

10. A method for operating an apparatus for thawing frozen food products, comprising:
• providing an elongated tank configured to carry a heating liquid for thawing the frozen food product, where the tank has an infeed section where the frozen food products are fed into the tank and an outfeed section where the thawed food products are removed from the tank,
• providing a spiral auger extending between the infeed section and the outfeed section, where the spiral auger comprises cylindrical helical flights configured to advance the food products from the infeed section towards the outfeed section through rotational movement of the spiral auger,
• feeding the frozen food products as a frozen food blocks at the infeed end, and
• designing the spiral auger such that the axial pitch between adjacent helical flights at the infeed section than the axial pitch between adjacent helical flights at the outfeed section of the auger, and such that the axial pitch between adjacent helical flights at the infeed end accommodates the dimensions of the frozen food blocks.

11. The method according to claim 10, wherein the method further comprises controlling the temperature of the heating liquid during the thawing of the frozen food products.

12. The method according to any of the claims 10 or 11, wherein controlling the temperature of the heating liquid comprises regulating the heating liquid such that a temperature gradient is established along the tank, with a higher liquid temperature at the infeed section and a lower temperature at the outfeed section.

13. The method according to claim 12, wherein the controlling the temperature is such that the thawed food products have a predefined target temperature at the outfeed end when removed from the tank.

14. The method according to claim 12, wherein the is between -2°C - +2°C, such as around 0°C.

15. The method according to any of the claims 10 to 14, wherein at the outfeed end the food products are discharged individually and separately from the tank.
